Europäisches Patentamt

European Patent Office

Office européen des brevets

(19)

(11) Veröffentlichungsnummer: **0 073 933**
**B1**

(12) **EUROPÄISCHE PATENTSCHRIFT**

(45) Veröffentlichungstag der Patentschrift:
**07.01.88**

(51) Int. Cl.⁴: **F 16 G 3/00**

(21) Anmeldenummer: **82107039.8**

(22) Anmeldetag: **04.08.82**

(54) **Verfahren zum Reparieren eines Stahlseilfördergurtes.**

(30) Priorität: **09.09.81 DE 3135602**

(43) Veröffentlichungstag der Anmeldung:
**16.03.83 Patentblatt 83/11**

(45) Bekanntmachung des Hinweises auf die Patenterteilung:
**07.01.88 Patentblatt 88/1**

(84) Benannte Vertragsstaaten:
**AT BE CH DE FR GB IT LI LU NL SE**

(56) Entgegenhaltungen:
**DE - A - 2 357 994**
**FR - A - 976 361**
**FR - A - 2 243 129**

(73) Patentinhaber: **STAHLGRUBER Otto Gruber GmbH & Co., Einsteinstrasse 130, D-8000 München 80 (DE)**

(72) Erfinder: **Gottauf, Georg, Elektrastrasse 56, D-8000 München 81 (DE)**

(74) Vertreter: **Huss, Carl-Hans, Dipl.-Ing. et al, Patentanwalt Griesstrasse 3 a Postfach 14 54, D-8100 Garmisch-Partenkirchen (DE)**

## Beschreibung

Die Erfindung betrifft ein Verfahren zum Reparieren eines Stahlseilfördergurtes gemäss dem Oberbegriff des Patentanspruchs 1.

Wenn Fördergurte für Baustoffe, Erze, Kohle oder dergleichen verhältnismässig lang und breit (bis zu 3500 mm) sind, bestehen sie überwiegend aus Gummi und enthalten im Gummiquerschnitt eine Verstärkungslage aus parallel nebeneinander eingebetteten Stahlseilen. Diese «Stahlseilfördergurte» oder vereinfacht «Stahlseilgurte» sind im Betrieb durch die Aufgabe des Fördergutes, aber wegen der Beschaffenheit des beförderten Materials, in das immer wieder Fremdkörper gelangen, auch auf der Förderstrecke hohen Beanspruchungen ausgesetzt. Diese können im Dauerbetrieb zu Verschleissschäden oder durch plötzliche Überbeanspruchung zu anderen Schäden führen, z.B. zu Abrasionsschäden, Einrissen, Einschnitten, Durchschlägen und Durchrissen. Da es aus wirtschaftlichen Gründen unzweckmässig ist, einen beschädigten oder stellenweise abgearbeiteten Gurt immer durch einen neuen zu ersetzen, aber der durch einen Gurtschaden bedingte Stillstand einer Förderstrecke in der Regel den Stillstand der gesamten Förderanlage zur Folge hat, muss die beschädigte Stelle eines Stahlseilgurtes so schnell und so gut und dauerhaft wie möglich in Pausenzeiten wieder instandgesetzt werden. Die schnellste Art ist die sog. «Kaltreparatur», bei der die vorher sachgemäss ausgeschnittene Schadenstelle mit Augleichs- und Reparaturplatten aus vulkanisiertem Kautschuk neu aufgebaut wird. Diese Platten sind an den Berührungs- und Verbundflächen mit der Schadensstelle oder anderen Platten mit einer entsprechend zusammengesetzten Verbindungsschicht aus unvulkanisiertem, nach Einstrich mit einer entsprechenden Vulkanisierlösung vulkanisierbaren Kautschuk versehen. Am reparierten Gurt vulkanisieren die Verbindungsschichten durch den im Betrieb entstehenden Druck und die dabei entstehende Wärme aus und verbinden somit die Platten untereinander und mit der Schadenstelle. Bei einem Schaden, bei dem gerissene oder stark beschädigte Seilstücke herausgeschnitten werden müssen, können dann aber u.U. die im Betrieb beim Umlauf um Umlenktrommeln ständig gebogenen und wieder gestreckten Enden der verbleibenden Seile den Gummi in ihrer Nachbarschaft zerstören und sich sogar aus dem Gurt ganz herausarbeiten. Das äusserste Ende eines Seiles wirkt dann wie ein steifes Stabstück und macht die Biegung nicht mit.

An Reparaturstellen mit beschädigten Seilen wurden deshalb bei einem bisher angewendeten sog. Kaltreparatur-Verfahren, teils um an dieser Stelle die Festigkeitsunterbrechung des Gurtes zu überbrücken, teils um wenigstens eine gewisse Fixierung der Seilenden zu gewährleisten und damit ein Herausarbeiten derselben aus dem Gummiquerschnitt zu vermeiden, dicht über den unterbrochenen Seilen eine Stahlcordeinlage eingebracht. Sie besteht aus einer Gummiplatte, in die parallel nebeneinander im Verhältnis zu den Seilen des Gurtes im Querschnitt erheblich dünnere, aber dafür in einer gegenüber den Gurtseilen geringeren Teilung Stahlseile eingebettet sind. Die Seilstücke in der Cordeinlage schaffen aber keine Verbindung mit den unterbrochenen Seilen des Gurtes, da die Einlage nur eine Gummi-Gummi-Verbindung mit der Umgebung der Schadensstelle eingeht. Dies trifft insbesondere dann zu, wenn aus den beschädigten Seilen im Gurt Stücke herausgeschnitten werden mussten. Ausserdem ist eine Fixierung der Seilenden nur dann gegeben, wenn die Stahlcordeinlage oberhalb und unterhalb der Schadenstelle in den Gummiquerschnitt eingebracht wird. Dadurch wird aber die Schadensstelle grossflächig wesentlich steifer als der übrige Gurtkörper, wodurch beim Laufen um Umlenktrommeln Schwierigkeiten entstehen und wodurch an der Aufgabestelle des Fördergurtes die Aufprallenergie in geringerem Masse absorbiert wird.

Prinzipiell ähnliche Verhältnisse liegen bei der sog. «Endlosverbindung» vor.

Für diese ähnliche Aufgabestellung ist es z.B. durch die DE-A-2 345 414 bekannt, die Enden der Drahtseile mit ihnen einander zugewandten Stirnflächen in starre Hülsen einzufassen und sie auf diese Weise zu verbinden. Dabei kann auch der zwischen je einem Seilende und dem Innenmantel der starren Hülse gebildete Ringraum mit einer plastisch oder elastisch verformbaren Füllmasse, beispielsweise einem Kunstharz, unter Aussparung von die Verformung zulassenden Freiräumen ausgegossen werden, um einen Ausgleich von Spannungsunterschieden zwischen den einzelnen Seilen über die Breite des Gurtes zu erreichen. Dennoch bleibt aber die Hülse eine die Biegung des Gurtes beim Durchhängen auf der Förderstrecke und beim Umlaufen über die Umlenktrommeln nicht mitmachender Fremdkörper, zumal es sich herausgestellt hat, dass die im Betrieb teilweise hohe Werte annehmenden Zugbeanspruchungen verhältnismässig lange Fassungen bedingen, wenn man die Gefahr, dass ein Seilende aus der Hülse herausgerissen wird, vermeiden will.

Aus der DE-A-2 357 994 ist es ferner bekannt, zur Verbindung der Enden von Stahlseilen diese Enden mit hülsenförmigen Reparaturelementen zu verbinden, die jeweils ein Auge aufweisen. Die gegenüberliegenden, mit diesen Augen versehenen Reparaturelemente werden mittels eines Gelenkstabes miteinander verbunden, wodurch sich die Reparaturstelle zwar besser als bei Verwendung einer starren Verbindungshülse den Biegungen des Gurtes anpassen kann, jedoch wirkt auch bei dieser Ausbildung der Gelenkstab wie ein Fremdkörper, dessen technologische Eigenschaften sich von denjenigen der Verstärkungsseile erheblich unterscheiden.

Demnach lag der Erfindung die Aufgabe zugrunde, ein schnell und einfach auszuführendes Verfahren zum Reparieren eines Stahlseilfördergurtes anzugeben, bei dem eine möglichst geringe Versteifung oder sonstige Veränderung der Schadensstelle auftritt und bei dem verhindert ist, dass Seilenden im Gummiquerschnitt zerstörend wirken oder sich aus den Gurten herausarbeiten können.

Diese Aufgabe wird durch das Merkmal des kennzeichnenden Teils von Patentanspruch 1 gelöst.

Die Erfindung ist in der Zeichnung an einigen, keinen Anspruch auf Vollständigkeit erhebenden Beispielen veranschaulicht und anhand dieser nachfolgend beschrieben. Es stellen dar:

Fig. 1 einen Querschnitt durch einen Stahlseilgurt an der Schadensstelle, repariert mit einem Ersatzstück nach der Erfindung in gering verkleinertem Massstab,

Fig. 2 ein an einer Schadensstelle unterbrochenes und nach einer Erfindungsvariante überbrücktes Stahlseil unter Weglassung des übrigen den Fördergurt aufbauenden Gummiquerschnitts,

Fig. 3 eine weitere abgewandelte Ausführungsform in der Darstellungsart der Fig. 2,

Fig. 4 eine aus den Ausführungsformen nach den Fig. 3 und 4 weiterentwickelte Variante in der Darstellungsart der Fig. 2.

Die Erfindung sieht in an sich bekannter Weise eine direkte Überbrückung der Lücken 1 zwischen den Enden 2 und 3 der beschädigten Seile 4 und eine Fassung dieser Enden vor, jedoch wird unter «direkter Überbrückung» dabei nicht nur eine solche verstanden, die die Lücken 1 ausfüllt, sondern auch eine solche, die die Lücke oder Lücken mit einem dem unterbrochenen Seil in der Grundform und den technologischen Eigenschaften gleichen oder ähnlichen Material ausfüllt.

Hierzu sind die Seilenden einfassende Ersatzstücke 5 in Form von je einem Seil der Verstärkungslage zugeordneten Schraubenfedern 6 vorgesehen. Diese können innen und aussen mit einer dünnen Schicht aus unvulkanisiertem vulkanisierbarem Kautschuk überzogen sein. Die dünne Innenschicht 7 erleichtert dabei das Aufschieben der Schraubenfeder 6 auf die durch das Ausschneiden eines beschädigten Stückes eines Seiles 4 entstandenen Enden 2 und 3. Sie kann aber auch dann, wenn der Hüllgummi der Seilenden nicht oder nicht ganz entfernt wurde, nach Einstrich derselben mit einer Vulkanisationsflüssigkeit eine Vulkanisationsverbindung mit diesem Hüllgummi eingehen. Die äussere Verbindungsschicht 8 geht nach entsprechender bekannter Präparierung eine Verbindung mit den Verbindungsschichten zwischen die Seile gelegter Zwischenstreifen und mit der Verbindungsschicht 9 einer Ausgleichsplatte 10 ein, auf die in üblicher Weise zur Ausfüllung des vorher angebrachten Ausschnitts der Schadensstelle eine Reparaturplatte 11 aufgebracht wird. Auf der Laufseite 12 des Gurtes ist nur der Ausschnitt 13 dargestellt, der im Verlauf der Gesamtreparatur in üblicher Weise mit Ausgleichsplatten ausgefüllt wird. Will man beim Umlaufen des Stahlseilgurtes über Umlenktrommeln grössere Lücken zwischen den Federgängen vermeiden, werden zweckmässig Ersatzstücke aus mehrgängigen Schraubenfedern eingesetzt. Es kommt darauf an, dass die Ersatzstücke 5 den Eigenschaften der verstärkenden Seite 4 insoweit angepasst sind, als sie nicht nur fest, sondern auch nicht weich oder gar unter der bei Fördergurten zu erwartenden Belastung bleibend verformbar sein sollen. Sie sollen den Versteifungs- und Verstärkungseffekt, den vor der Reparatur die herausgeschnittenen Seilbereiche hatten, möglichst gut ersetzen, und dann werden ihre als Aufnahmehülsen für die Seilenden wirkenden Enden diese so sicher fassen und halten, dass diese Seilenden beim Umlaufen um die Umlenktrommeln der Förderanlagen und beim Zu- oder Ablauf in die Horizontale ihre Lage im Gummiquerschnitt nicht verändern.

Eine andere Möglichkeit der festen Verbindung zwischen einem Ersatzstück und den Seilenden besteht darin, Schraubenfedern vorzusehen, deren Innendurchmesser ein gewisses, wenn auch geringes Untermass gegenüber dem Aussendurchmesser der Verstärkungsseile aufweist. Wenn man dann die Feder als Ganzes festhält, aber durch Drehung entgegengesetzt ihrer Wicklung den auf das Seilende aufzuschiebenden Federbereich aufweitet, kann sie auf ein Seilende aufgeschoben werden, und wenn man sie dann loslässt, so springt sie auf ihren Ursprungsdurchmesser zurück und klemmt sich auf das Seilende unverrückbar fest.

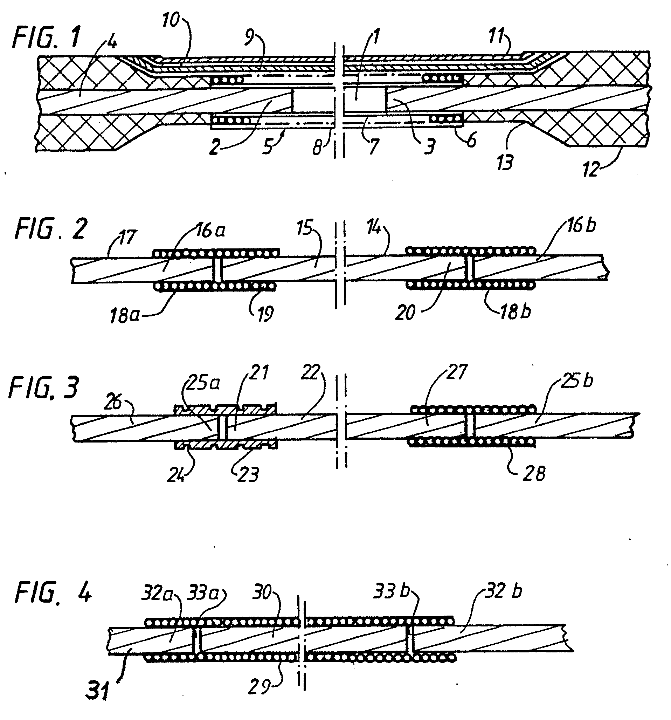

Die Ausführungsform der Fig. 1 kann gemäss Fig. 2 für Schäden, die die Entfernung längerer Seilabschnitte erfordern und damit grössere Lücken 14 schaffen, weiterentwickelt werden. Die erfindungsgemässe Überbrückung ist für die vereinfachte Darstellung ohne den zugehörigen Fördergurtquerschnitt dargestellt. In einem solchen Falle könnte eine entsprechend lange Schraubenfeder zu «weich» sein und sich beim Umlauf des Gurtes um Antriebs- oder Umlenkrollen oder auch bei grösseren Durchhängen zu stark dehnen. Deshalb ist als Ersatzstück ein Seilstück 15 vorgesehen, das mit den Enden 16a, 16b des Seils 17 über zum Ersatzstück gehörende Hülsen in Form von Schraubenfedern 18a, 18b verbunden werden kann, die auf die vorbeschriebene Art die Seilenden und Enden des Seilstücks 15 fassen und miteinander verbinden.

Das Ersatzstück ist in Art, Material und Durchmesser dem Seil 17 angepasst. Für die Reparatur können Ersatzstücke der grössten angenommenen Überbrückungs- oder Reparaturlänge oder Stücke unterschiedlicher Länge auf Vorrat gehalten werden, auf deren eines Ende zur Vereinfachung der Reparatur bereits das Ende 19 der Schraubenfeder 18a in vorbeschriebener Weise aufgeschrumpft ist. Für die Reparatur wird dann der über das Ersatzstück 15 überstehende Teil der Feder durch Aufdrehen im Durchmesser erweitert und über das Seil 17 geschoben und durch Zurückschnellenlassen der Feder aufgebracht. Danach wird das gegenüberliegende Ende 20 des Ersatzstückes passend zugeschnitten und mittels der Schraubenfeder 18b mit dem Seilende 16b verbunden.

Diese Art der Reparatur kann weiter dadurch vereinfacht werden, dass man auf das eine Ende der auf Vorrat gehaltenen Ersatzstücke, z.B. das Ende 21 des Ersatzstückes 22 gemäss Fig. 3 eine zylindrische Klemmuffe 23 aufbringt, die aus einem sehr zähen, aber trotzdem verhältnismässig leicht verformbaren Material besteht. Diese Klemmuffe 23 nimmt dann mit ihrem Bohrungsteil 24 das Seilende 25a des Seils 26 auf, wonach es an diesem mit einem Quetschwerkzeug festgeklemmt wird. Das dem Muffenende 21 gegenüberliegende Ende 27 des Ersatzstückes 22 ist nach dem Zurechtschneiden auf die erforderliche Länge in der in Fig. 2 dargestellten Weise am Ende 25b des Seils 26 mittels einer Schraubenfeder 28 befestigt.

Dabei kann die Klemmuffe 23 wegen der elastischen Verbindung durch die Schraubenfeder 28 verhältnismässig kurz gehalten werden.

Man kann die Erfindungsvarianten der Fig. 1 und 2 kombinieren, um den Effekt zu erzielen, die Ersatzstücke den Eigenschaften der verstärkenden Seile auch dann möglichst weit anzupassen, wenn aus dem beschädigten Seil grössere Bereiche herausgeschnitten werden mussten. Hierzu dient nach Fig. 4 ein Ersatzstück in Form einer Schraubenfeder 29 mit eingeklemmtem Seilstück 30, das in seinem Durchmesser und seinen Eigenschaften dem zu reparierenden Seil 31 ganz oder weitgehend entspricht. Die Länge des Seilstückes 30 ist dabei so bemessen, dass an beiden Enden der Feder 29 freie, die Seilenden 32a, 32b umgreifende Hülsen entstehen und andererseits die Lücken 33a, 33b möglichst gering werden.

## Patentansprüche

1. Verfahren zum Reparieren eines Stahlseilfördergurtes mit beschädigten Verstärkungsseilen (4; 17; 26; 31), wobei an den beschädigten Stellen Bereiche der Verstärkungsseile ausgeschnitten und jeweils die beiden Enden (2, 3; 16a, 16b; 25a, 25b; 32a, 32b) eines Verstärkungsseils in der Seilachse eingefasst und verbunden werden, dadurch gekennzeichnet, dass die Enden (2, 3; 16a, 16b; 25a, 25b; 32q, 32b) der Verstärkungsseile 4; 17; 26; 31) durch Schraubenfedern (6; 18a, 18b; 28, 29) verbunden werden.

2. Verfahren nach Anspruch 1, dadurch gekennzeichnet, dass die Enden der Verstärkungsseile durch mehrgängig gewickelte Schraubenfedern verbunden werden.

3. Verfahren nach Anspruch 1, dadurch gekennzeichnet, dass der Innendurchmesser der Schraubenfeder geringfügig kleiner als der Aussendurchmesser des zu reparierenden Seiles ist und dass die Windungen der Schraubenfeder entgegen der Wickelrichtung aufgedreht werden, woraufhin die Schraubenfeder auf das Seil oder die Seilstückenden aufgeschoben und nach Beendigung der Aufdrehung durch Einnahme des ursprünglichen Durchmessers auf das jeweilige Seil oder Seilstückende aufgeschrumpft wird.

4. Verfahren nach Anspruch 1, dadurch gekennzeichnet, dass auf beide Enden eines in Art und Durchmesser dem überbrückenden Seilbereich entsprechenden oder etwa entsprechenden Seilstücks (15) je eine Schraubenfeder (18a, 18b) soweit aufgezogen wird, dass Freibereiche für die Erfassung der Seilenden (16a, 16b) verbleiben.

5. Verfahren nach Anspruch 4, dadurch gekennzeichnet, dass eine Schraubenfeder durch eine Klemmuffe (23) ersetzt wird.

6. Verfahren nach Anspruch 4, dadurch gekennzeichnet, dass ein Seilstück (30) in eine durchgehende Schraubenfeder (29) derart eingeklemmt wird, dass deren beide überstehenden Enden Aufnahmehülsen für die Seilenden (32a, 32b) bilden.

## Claims

1. Method for repairing a steel cable conveyor belt with damaged reinforcing cables (4; 17; 26; 31), wherein regions of the reinforcing cables at the damaged place are cut out and each of the two ends (2, 3; 16a, 16b; 25a, 25b; 32a, 32b) are fitted into and joined to a reinforcing cable on the cable axis, characterised in that the ends (2, 3; 16a, 16b; 25a, 25b; 32a, 32b) of the reinforcing cables (4; 17; 26; 31) are connected by helical springs (6; 18a, 18b; 28, 29).

2. Method according to claim 1, characterised in that the ends of the reinforcing cables are connected by multi-start helical springs.

3. Method according to claim 1, characterised in that the inside diameter of the helical springs is slightly smaller than the outside diameter of the cable to be repaired and in that the turns of the helical spring are turned against the winding direction, whereafter the helical spring is pushed on to the cable or the cable section ends and after completion of the turning is shrunk on to the corresponding cable or cable section end by resumption of the original diameter.

4. Method according to claim 1, characterised in that a helical spring (18a, 18b) is fitted on the two ends of a cable section (15) corresponding in kind and diameter to the bridged cable region, or approximately corresponding, to such an extent that free regions remain for fitting on to the cable ends (16a, 16b).

5. Method according to claim 4, characterised in that one helical spring is replaced by a crimping sleeve (23).

6. Method according to claim 4, characterised in that a cable section (30) is so gripped in a continuous helical spring (29) that the two projecting ends form receiving sleeves for the cable ends (32a, 32b).

## Revendications

1. Procédé pour la réparation d'une bande transporteuse à câbles en acier comportant des câbles de renforcement endommagés (4; 17; 26; 31), des zones des câbles de renforcement étant découpées aux endroits endommagés et les deux extrémités (2, 3; 16a, 16b; 25a, 25b; 32a, 32b) d'un câble de renforcement étant entourées et reliées dans l'axe du câble, caractérisé en ce que les extrémités (2, 3; 16a, 16b; 25a, 25b; 32a, 32b) des câbles de renforcement (4; 17; 26; 31) sont reliées par des ressorts à boudin (6; 18a, 18b; 28, 29).

2. Procédé selon la revendication 1, caractérisé en ce que les extrémités des câbles de renforcement sont reliées par des ressorts à boudin enroulés à filets multiples.

3. Procédé selon la revendication 1, caractérisé en ce que le diamètre intérieur du ressort à boudin est légèrement inférieur au diamètre extérieur du câble à réparer et que les spires du ressort à boudin sont déroulées dans le sens contraire au sens d'enroulement, suite à quoi le ressort à boudin est poussé sur le câble ou les extrémités de portion de câble et, le déroulement terminé, il est serré sur le câble ou l'extrémité de portion de câble correspondant, en reprenant son diamètre initial.

4. Procédé selon la revendication 1, caractérisé en ce que sur chacune des deux extrémités d'une portion de câble (15), dont le type et le diamètre correspondent ou correspondent à peu près à la zone de câble à ponter, un ressort à boudin (18a, 18b) est emmanché de manière à laisser des zones libres pour saisir les extrémités de câble (16a, 16b).

5. Procédé selon la revendication 4, caractérisé en ce qu'un ressort à boudin est remplacé par un manchon de serrage (23).

6. Procédé selon la revendication 4, caractérisé en ce qu'une portion de câble (30) est serrée dans un ressort à boudin continu (29), de sorte que les deux extrémités, faisant saillie, de ce ressort forment des douilles de réception pour les extrémités de câble (32a, 32b).

FIG. 1

FIG. 2

FIG. 3

FIG. 4